# EUROPÄISCHE PATENTSCHRIFT

(11) **EP 0 946 939 B1**
(45) Veröffentlichungstag und Bekanntmachung des Hinweises auf die Patenterteilung: **19.09.2001**
(21) Anmeldenummer: 97952046.7
(22) Anmeldetag: 09.12.1997
(51) Int. Cl.: G10K 11/172

(54) **ABSORBER ZUM ABSORBIEREN AKUSTISCHER SCHALLWELLEN UND VERFAHREN ZU DESSEN HERSTELLUNG**
ABSORBER TO ABSORB ACOUSTIC SOUND WAVES AND METHOD FOR ITS PRODUCTION
AMORTISSEUR DESTINE A ABSORBER DES ONDES SONORES ACOUSTIQUES ET SON PROCEDE DE FABRICATION

(30) Priorität: 17.12.1996 DE 19652527
(43) Veröffentlichungstag der Anmeldung: 06.10.1999
(73) Patentinhaber: FAIST Automotive GmbH & Co. KG, 86381 Krumbach (DE)
(72) Erfinder: PFAFFELHUBER, Klaus, D-89312 Günzburg (DE); KÖCK, Gerhard, D-86480 Waltenhausen (DE); LAHNER, Stefan, D-86381 Krumbach (DE)
(74) Vertreter: Müller, Hans-Jürgen, Dipl.-Ing.
(86) Internationale Anmeldenummer: EP9706872
(87) Internationale Veröffentlichungsnummer: WO9827541

(56) Entgegenhaltungen:
- DE-A- 3 123 355
- DE-A- 3 313 001
- DE-A- 3 545 997
- DE-A- 3 615 360
- DE-U- 29 605 599
- GB-A- 2 252 073

## Beschreibung

Die Erfindung bezieht sich auf ein Verfahren zur Herstellung eines Absorbers zum Absorbieren akustischer Schallwellen der im Oberbegriff des Anspruchs 1 genannte Gattung.

Derartige Absorber sind bereits bekannt (GB-A-2 252 043, DE-C-36 15 360, WO 96/08812, DE-A-27 24 172, DE-A-33 13 001). Dabei werden wabenartige Kammern in der spritzgegossenen oder im RIM-Verfahren hergestellten Basis-Baueinheit -bestehend aus einem Trägerkörper und Abstandhaltern- oder die "Täler" von gewellten Strukturen durch eine Abdeckschicht in Richtung zur Schallquelle abgedeckt. Die Abdeckschicht weist z.B. noppenartige Luftkammern auf, so daß beim Vibrieren der "Luftkissen" und deren Anschlagen an Ränder der Abstandhalter Reibungsdämpfung entsteht. Teilweise ist die Abdeckschicht nur am Rand mit dem Tragkörper bzw. der Basis-Baueinheit starr verbunden. Die Luftkammern stehen z.B. untereinander in Verbindung.

Der Erfindung liegt die Aufgabe zugrunde, einen Absorber dieser Gattung herstellungstechnisch zu vereinfachen und funktionsmäßig zu verbessern. Zusätzlich soll die Entsorgbarkeit insb. auf dem Wege wiederverwendbarer Materialteile möglichst verbessert werden.

Die Erfindung ist hinsichtlich des Herstellungsverfahrens im Anspruch 1 gekennzeichnet. In Unteransprüchen sind weitere Verbesserungen beansprucht.

Der Absorber wird aus zwei je für sich einstückigen Einheiten hergestellt. Die Abstandhalter bilden mit dem Trägerkörper eine vorgeformte Basis-Baueinheit, die insb. aus tiefgezogenem oder spritzgepreßtem Thermoplast, wie Polypropylen (PP), gepreßtem Thermoplast oder Duroplast, spritzgegossenem Thermoplast- oder Duroplast, hinterpreßten bzw. hinterspritzten Kunststoffen, u.z. insb. mit Faserverstärkungen bestehen. Diese Materialien können sowohl aus Neuware als auch aus Recyclatware hergestellt sein.

Zur Herstellung der Basis-Baueinheit sind insb. folgende Verformungsverfahren anwendbar:
1. Low Pressure Technology (LPT), bei der mit einem niedrigen Druck zwischen etwa 10 und 100 bar Kunststoff in die betr. Form gepreßt wird. Dabei ist auch die Anwendung langfasriger Glasfasern (LFG) mit einer Faserlänge von ca. 12 mm möglich. Bei der Heizkanaltechnik wird insb. PP (Polypropylen) mit 20 % Talk gemischt.
2. Reaction Injection Moulding (RIM), bei der PU (Polyurethan) als Kunststoff bevorzugt angewendet wird. Im Falle von Faserverstärkungen (R-RIM) werden Glasfasern bevorzugt, um die thermische Stabilität zu begünstigen. Es wird bei niedrigem Druck bis zu etwa 15 bar spritzgepreßt.
3. Resin Transfer Moulding (RTM), bei dem gleichfalls bei bevorzugt niedrigem Druck bis etwa 20 bar Kunststoff, insbesondere Epoxy-/Phenol-/Vinylharze, gegebenenfalls verstärkt mit Glasfasern in die geschlossene Form verpreßt wird.
4. Spritzguß (SG), bei dem hoher Druck zwischen etwa 350 und 700 bar zum Einbringen des polymeren Kunststoffs in die Gußform angewendet wird. Dabei sind gleichfalls Verstärkungen anwendbar.
5. Glasmattenverstärktes Thermoplastverfahren (GMT oder AZDEL), bei dem z.B. PP mit einer Glasfasermatte bei Drucken zwischen etwa 150 bis 200 bar verpreßt wird.

Beim hinterpreßten Kunststoff wird der Kunststoff durch LPT oder GMT mit einer textilen Struktur oder einer Folie zwischen Preßformen verpreßt, während beim hinterspritztem Kunststoff der Kunststoff in einer Spritzform an die textile Struktur oder die Folie angespritzt wird.

Die dünne Abdeckeinheit ist dagegen eine insb. dünne und insb. aus einer geraden Ebene unmittelbar auf die Basis-Baueinheit aufgedrückte und dabei verformte, aber mindestens bereichsweise schwingfähige Abdeckschicht. Die schwingfähigen Bereiche sollten sich jeweils zwischen denjenigen Stellen der Abdeckeinheit befinden, welche im wesentlichen starr mit freien Stirnenden von Abstandhaltern insb. durch Kunststoff-Schweißverbindungen verbunden sind. Solche Schweißverbindungen können durch Erwärmen des thermoplastischen Kunststoffs mittels z.B. Wärmestrahlen, aber auch durch HF- oder Ultraschallverschweissen hergestellt werden. Die Abdeckschicht schließt die einzelnen Resonanzkammern sowohl nach außen als auch unter sich ab.

Die Abdeckeinheit besteht beispielsweise aus einer dünnen Schicht aus Thermoplasten, wie z.B. Polypropylen. Sie kann aber auch aus einem Vlies bestehen. Bevorzugt ist sie als Verbundstoff, wie Laminat, verschiedener Einzelschichten ausgebildet. Die Schichtdicke sollte sich im Bereich zwischen 0,5 und 8 mm befinden.

Für manche Anwendungsfälle kann es zweckmäßig sein, die Abdeckeinheit aus einer Doppelschicht herzustellen, welche einerseits aus einer dünnen Metallschicht aus insb. Aluminium einer Schichtdicke zwischen 5 und 200 µm und andererseits aus einem thermoplastischen Kunststoff, wie z.B. Polypropylen, und/oder einem Vlies besteht, welcher an der der Basis-Baueinheit zugewandten Seite der Aluminiumschicht befestigt ist. Diese Thermoplastschicht bildet dann die Verbindungsschicht zu dem Rand des Trägerkörpers einerseits und zu den Stirnenden der Abstandhalter andererseits.

Die Herstellung der beiden Baueinheiten erfolgt bevorzugt durch folgendes Verfahren:

Zuerst wird ein ebener Zuschnitt oder eine ebene Bahn der einlagigen oder mehrlagigen Abdeckschicht in einer geraden Ebene über der vorgeformten Basis-Baueinheit aufgespannt. Anschließend wird ein Stempel auf die Abdeckschicht in Richtung zur Basis-Baueinheit gedrückt. Die Stirnfläche des Stempels weist eine Art "Gegenfläche" zu der Fläche auf, welche die Abdeckeinheit im endgültigen Zustand auf der Basis-Baueinheit einnehmen soll. Der Stempel dient also als Verformungswerkzeug, da er die Abdeckschicht verformt und auf die freien Stirnenden der Abstandhalter und den Rand der Basis-Baueinheit aufdrückt. Durch dieses Verformen nimmt die Abdeckschicht die Formgestalt an, in welcher sie die Abdeckeinheit für den Absorber bildet. Gleichzeitig ist sie an der Basis-Baueinheit befestigt, so daß sie nicht in ihren ebenen Ausgangszustand "zurückfedert".

Die dünne Abdeckschicht wird bei diesem Verformungsvorgang auf diejenige Seite der Basis-Baueinheit aufgesetzt, welche die freien Stirnränder der Abstandhalter aufweist, zwischen denen sich Zwischenräume befinden.

Das Befestigen der Abdeckeinheit, d.h. das Verbinden der aneinanderliegenden Teile, nämlich des Rands des Trägerkörpers und freier Stirnränder der gewünschten Abstandhalter mit der Abdeckeinheit erfolgt insb. durch Anwendung von Druck und Wärme im Falle der Verwendung thermoplastischer Materialien oder Thermokleber. Die Abdeckeinheit kann auch mit einer selbsthaftenden Haftschicht an derjenigen Seite versehen sein, welche der Basis-Baueinheit, nämlich deren Rand und den freien Stirnrändern der Abstandhalter, zugewandt ist.

Das Verfahrensmerkmal des Verformens der Abdeckschicht und des starren Verbindens derselben mit der vorgefertigten Basis-Baueinheit sollten in ein und demselben Werkzeug zeitlich unmittelbar hintereinander erfolgen, was vor allem die Herstellungszeit verkürzt und Verlust von Wärmeenergie vermindern hilft.

Das starre Verbinden hat auch den Vorteil, daß einer der Abdeckschicht eventuell innewohnende Eigenschaft, sich im Laufe der Zeit mehr oder weniger schnell aus der vorgeformten Konfiguration wieder in die ursprüngliche ebene Konfiguration zurückzuverformen, entgegengewirkt wird. Insofern ergeben sich auch größere Möglichkeiten der Verwendung unterschiedlicher Materialien. Dabei ist es allerdings wesentlich, daß die Abdeckeinheit jedenfalls in Bereichen zwischen den Stirnenden bzw. Stirnränder der Abstandhalter frei schwingen kann und Schallwellen in die Zwischenräume übertragen werden, damit Schallenergie innerhalb der kammerartigen Zwischenräume zwischen der Basis-Baueinheit einerseits und der Abdeckeinheit andererseits gedämpft bzw. absorbiert werden kann.

Statt oder zusätzlich zu dieser Schwingfähigkeit kann die Abdeckeinheit auch mit Löchern versehen sein, die Schallwellendurchtritt ermöglichen.

Ein bevorzugtes Ausführungsbeispiel der Erfindung ist im folgenden anhand der Zeichnung näher beschrieben. Dabei Zeigen:
- Figuren 1 bis 3: Verfahrensstufen zur Herstellung eines erfindungsgemäßen Absorbers in schematischer Darstellung,
- Figur 4: einen Teilausschnitt aus einem erfindungsgemäßen Absorber und
- Figur 5 bis 8: Verfahrensstufen einer Verfahrensvariante.

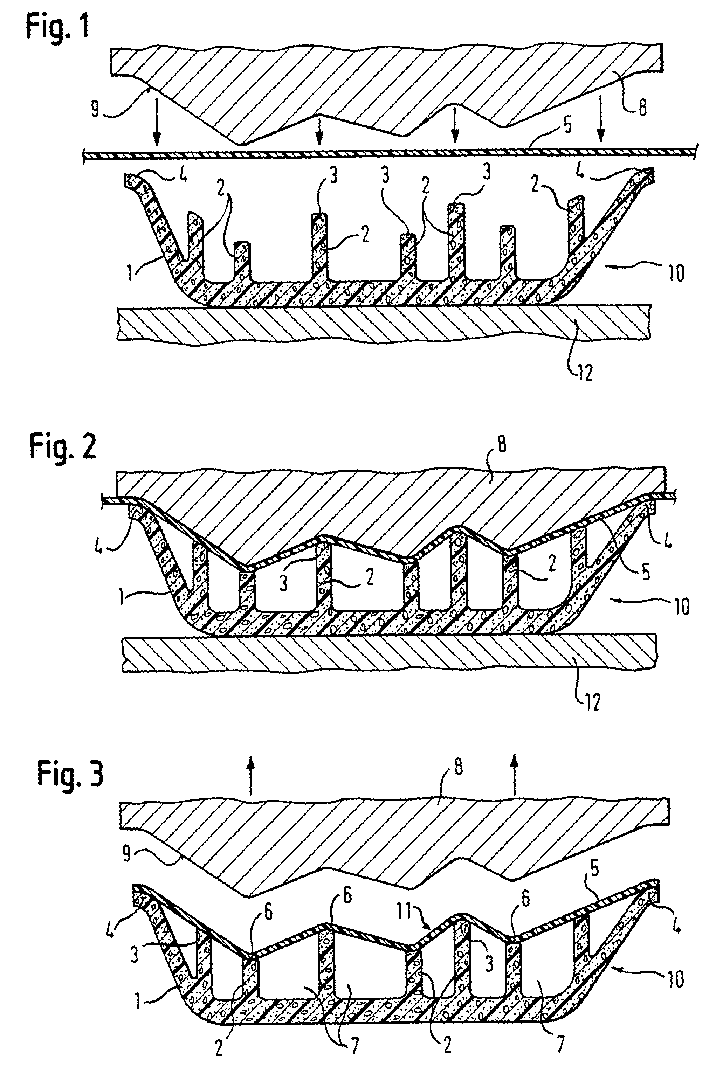

Gemäß Figur 1 ist eine Basis-Baueinheit 10 auf einer Standfläche 12 aufgesetzt. Die Baueinheit 10 besteht aus einem Trägerkörper 1, von dem nach der der Standfläche 12 abgewandten Seite Abstandhalter 2 in unterschiedlichen Längen abstehen. Die Abstandhalter 2 und der Trägerkörper 1 bestehen aus dem gleichen Material, bei diesem Beispiel Polypropylen und sind durch Spritzpressen vorgeformt. Oberhalb des Randes 4 der Basis-Baueinheit 10 ist eine dünne Abdeckschicht 5 aus Polypropylen in einer geraden Ebene straff aufgespannt. Oberhalb derselben befindet sich ein Stempel 8 mit einer Stirnfläche 9, die im wesentlichen entsprechend der Konfiguration ausgebildet ist, welche die Abdeckschicht 5 nach ihrem Verformen und Verbinden mit der Basis-Baueinheit 10 einnehmen soll.

Der Stempel 8 wird nun aus der in Figur 1 gezeigten Stellung in Pfeilrichtung in die in Figur 2 gezeigte Stellung nach unten in Richtung zur Standfläche 12 gedrückt, dabei verformt sie die Abdeckschicht 5 derart, daß sich diese an die Außenkonturen der Stirnfläche 9 anschmiegt und hierdurch auch mit dem Rand 4 des Tragkörpers 1 sowie freien Stirnenden 3 von Abstandhaltern 2 in Kontakt gelangt. Durch insb. Anwendung von Druck und Wärme wird dafür gesorgt, daß sich an diesen "Kontaktstellen" fest und starre Verbindungen zwischen der Abdeckeinheit 11, d.h. der nunmehr verformten Abdeckschicht 5, und der Basis-Baueinheit 10 ergeben.

In einer weiteren Verfahrensstufe gemäß Figur 3 wird der Stempel 8 wieder in Pfeilrichtung von dem nun vervollständigten Absorber abgehoben, bei dem zwischen der Basis-Baueinheit 10, d.h. im Tragkörper 1 und den stegförmigen Abstandhaltern 2 einerseits und der Abdeckeinheit 11 kammerartige Zwischenräume 7 entstehen.

Durch die Erfindung kann die Herstellung wesentlich erleichtert werden, da ein Vorformen der Abdeckeinheit vermieden wird. Es empfiehlt sich das gleichzeitige Verformen und Verschweißen bzw. anderweitige Verbinden der Abdeckschicht 5 mit der Basis-Baueinheit 10. Hierzu kann die Abdeckschicht 5 auch eine Haftschicht an derjenigen Seite aufweisen, an der die Verbindungsstellen 6 entstehen sollen.

Die Abdeckschicht 5 kann auch mehrlagig ausgebildet sein. So kann die äußere Schicht aus einer Aluminiumfolie und die der Basis-Baueinheit zugewandte Seite aus einer thermoplastischen Kunststoffschicht bestehen, die bei Erwärmen schmilzt und sich an den Schmelzstellen mit den freien Stirnenden 3 bzw. dem Rand 4 der Basis-Baueinheit 10 verbindet, sofern dort gleichfalls thermoplastisches Material Anwendung findet.

Die Anwendung von Aluminium ermöglich auch induktive Heizmethoden, so daß der Stempel 8 selbst nicht unbedingt auf die Erweichungstemperatur zu erwärmen ist, obwohl sich dies in vielen Fällen als vorteilhaft erwiesen hat.

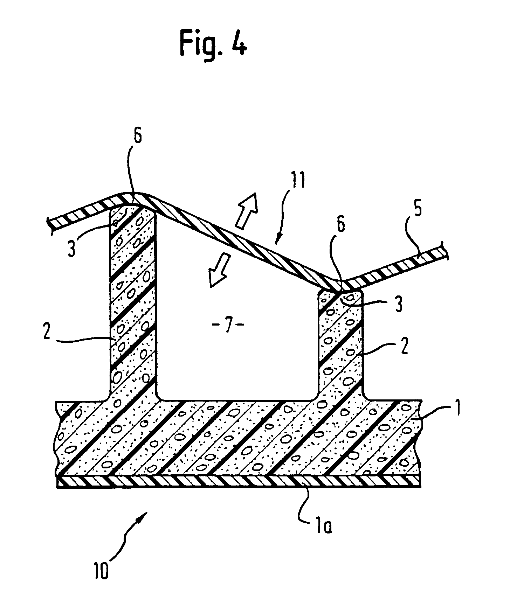

Gemäß Figur 4 besteht die Abdeckeinheit 11 aus einer 1 mm dicken Polypropylenschicht, die längs der freien Stirnenden 3 der Abstandhalter 2, d.h. an den starren Verbindungsstellen 6, mittels Kunststoff-Schweißverbindungen mit der Basis-Baueinheit 10 verbunden ist. Die Abdeckeinheit 11 vermag aber in den Bereichen zwischen den starren Verbindungsstellen 6, wie durch Pfeile angegeben, zu schwingen. Die schwingungsfähigen Bereiche der Abdeckeinheit 11 werden daher einerseits von Dicke und Material der Abdeckschicht 5 und andererseits vom Abstand der starren Verbindungsstellen 6 definiert. Auftreffender Luftschall wird durch die Abdeckschicht 5 beim Schwingen derselben auf den Gasraum in den kammerartigen Zwischenräumen 7 ggf. in abgemilderter Formübertragen. Je nach Dimensionierung der Zwischenräume 7 sowie des Materials der Wände derselben können bestimmte Frequenzgebiete selektiv gedämpft werden. An der Unterseite ist die Basis-Baueinheit 10 mit einer Schutzschicht la überzogen.

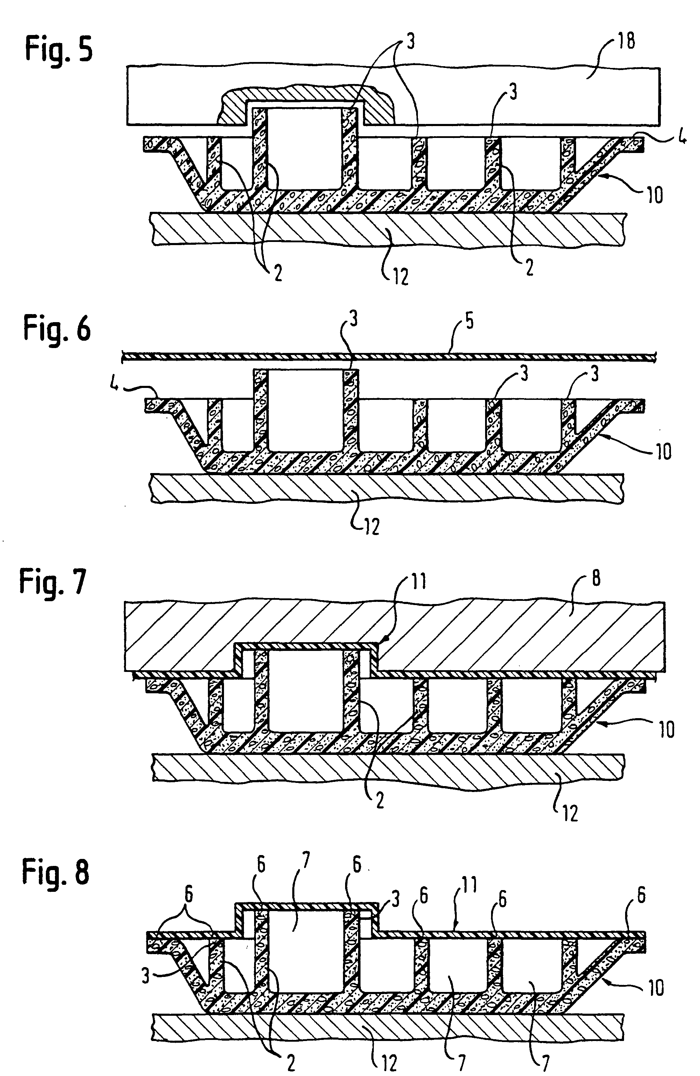

In den Figuren 5 bis 8 ist eine andere Verfahrensvariante zur Herstellung eines erfindungsgemäßen Absorbers schematisch in Schnittbildern gezeigt. Zuerst wird die auf die Standfläche 12 aufgesetzte vorgeformte Basis-Baueinheit 10 an der der Standfläche 12 abgewandten Seite, d.h. an den abgewandten Flächen des umlaufenden Randes 4 sowie an den freien Stirnenden 3 der Abstandhalter 2, mit Hilfe eines Heizwerkzeuges 18 erhitzt. Das Erhitzen wird soweit geführt, daß die dem Heizwerkzeug 18 zugewandte Flächen der freien Stirnenden 3 und des Randes 4 der Basis-Baueinheit 10 aufschmelzen.

Danach wird das Heizwerkzeug 18, das gemäß Figur 5 durch Strahlungswärme oder auch durch Direktkontakt die Plastifizierung des Kunststoffmaterials der Basis-Baueinheit 10 an den betreffenden Flächen durchführt, abgehoben und wird statt dessen eine Abdeckschicht 5, die auch aus mehreren Teilschichten bestehen kann, in der in Figur 6 angedeuteten Weise im Abstand von der Basis-Baueinheit 10 aufgespannt.

Im Anschluß daran wird ein Anpreßstempel 8 gemäß Figur 7 so auf die Abdeckschicht 5 von oben aufgesetzt, daß die letztgenannte sich der Konfiguration der betreffenden Stirnfläche des Stempels 8 entsprechend verformt und in dem in Figur 7 schematisch gezeigten Verformungszustand an die aufgeschmolzenen Teile des Randes 4 und der freien Stirnenden 3 der Basis-Baueinheit 10 angedrückt wird. Das Andrücken erfolgt so lange, bis sich das plastifizierte Material wieder so weit verfestigt hat, daß eine mechanisch feste Verbindung an den Verbindungsstellen 6 zwischen den vorher aufgeschmolzenen Oberflächen des Randes 4 und der freien Stirnenden 3 der Abstandhalter 2 einerseits und den betreffenden Gegenflächen der dünnen Abdeckschicht 5 andererseits hergestellt ist. Nun kann der Stempel 8 abgenommen werden, so daß sich der in Figur 8 im Querschnitt gezeigte endgültige Absorber mit den kammerartigen Zwischenräumen 7 zwischen der Basis-Baueinheit 10 und der verformten Abdeckeinheit 11 ergibt. Sämtliche Kammern 7 sind hierdurch gewissermaßen rundum vollständig abgeschlossen, während diejenigen Teile der Abdeckeinheit 11, die sich zwischen den Verbindungsstellen 6 zwischen Basis-Baueinheit 10 und Abdeckeinheit 11 befinden, schwingfähig bleiben.

Bei dieser Alternative des Hestellungsverfahrens empfiehlt sich die Verwendung gleichfalls thermoplastischen Kunststoffs für die Abdeckschicht 5. Dabei empfiehlt sich besonders die Verwendung von Polypropylen. Für manche Anwendungsfälle wird bevorzugt eine Schaumstoffschicht aus Polypropylen verwendet, die eine Schichtdicke von etwa 0,5 bis 10 mm aufweist. Diese dünne Schaumstoffschicht wirkt gewissermaßen als "Membran" in denjenigen Bereichen, welche die kammerartigen Zwischenräume 7 abdecken. Beim Andrücken der verformten dünnen Abdeckschicht 5 aus PP-Schaum z.B. gemäß Figur 7 schmelzen die betreffenden Kontaktstellen soweit auf, bis sie genügend plastifiziert sind, um nach dem Abkühlen eine mechanisch feste Verbindung mit der Basis-Baueinheit 10 einzugehen.

Nach einer anderen Ausbildung der Erfindung weist die Abdeckschicht 5 an der der Basis-Baueinheit 10 zugewandten Seite eine Vliesschicht auf, sofern nicht sogar die gesamte Abdeckschicht 5 aus Vliesstoff besteht. Dabei werden bevorzugt PP-Fasern für den Vliesstoff verwendet, so daß hier gleichfalls Auf- bzw. Anschmelzprozesse stattfinden. Es hat sich jedoch gezeigt, daß bei der Verwendung von aus Fastermaterial gebildeten Vliesstoffen auch ohne deren Auf- bzw. Anschmelzen eine mechanisch genügend fest Verbindung zur Basis-Baueinheit 10 bei Anwendung des Verfahrens gemäß den Figuren 5 bis 8 möglich ist, da die abstehenden Faserstückchen sich so weit in plastifiziertem Kunststoff einbetten, daß nach dessen Erkalten und Verfestigen genügend "Verankerungsstellen" in den Bereichen der Verbindungsstellen 6 zustandekommen. Die Fasern "verkrallen" sich gewissermaßen beim genügend starken Andrücken der Abdeckschicht 5 an die Basis-Baueinheit 10 bzw. deren Rand 5 und deren freien Stirnenden 3 der Abstandhalter 2.

## Patentansprüche

1. Verfahren zur Herstellung eines Absorbers zum Absorbieren akustischer Schallwellen mit einem Trägerkörper (1) und Abstandhaltern (2) sowie einer mit diesen verbundenen Abdeckeinheit (11), welche kammerartige Zwischenräume (7) - zwischen Trägerkörper (1) und Abstandhaltern (2) abdeckt, bei dem die Abstandhalter (2) mit dem Trägerkörper (1) eine einstückige vorgeformte Basis-Baueinheit (10) bilden und die Abdeckeinheit (11) eine auf die Basis-Baueinheit (10) aufgebrachte Abdeckschicht (5) aufweist, die mit Abstandhaltern (2) im wesentlichen starr verbunden ist,
**dadurch gekennzeichnet,**
**daß** die Basis-Baueinheit (10) aus dem Trägerkörper (1) und von diesem abstehenden Abstandhaltern zuerst vorgeformt wird und danach die Abdeckeinheit (11) mittels eines den Konturen der endgültigen Abdeckeinheit entsprechenden, an seiner Stirnfläche (9) konfigurierten Stempels (8) unmittelbar auf freie Stirnenden (3) von Abstandhaltern (2) und auf den Rand (4) der vorgeformten Basis-Baueinheit (10), unter Anwendung von Druck und Wärme, verformt und dort mit der Basis-Baueinheit verbunden wird.

2. Verfahren nach Anspruch 1,
**dadurch gekennzeichnet,**
**daß** die Abdeckeinheit (11) durch den Stempel (8) sowohl verformt als auch bis mindestens zum Erweichen von Kunststoff an Verbindungsstellen mit der Basis-Baueinheit (10) erwärmt wird.

3. Verfahren nach Anspruch 1 oder 2
**dadurch gekennzeichnet,**
**daß** freie Stirnenden (3) von Abstandhaltern (2) und der Rand (4) der vorgeformten Basis-Baueinheit (10) aufgeschmolzen werden und daß anschließend die Abdeckeinheit (11) mittels des konfigurierten Stempels (8) auf die plastifizierten Stirnenden (3) verformt und durch Abkühlen verfestigt und mechanisch mit diesen verbunden wird.

4. Verfahren nach einem der Ansprüche 1 - 3 - 10,
**dadurch gekennzeichnet,**
**daß** das Erwärmen des die Verbindungsstellen bildenden Kunststoffes durch induktives Heizen einer zur Abdeckschicht (11) gehörenden Aluminiumschicht vorgenommen wird.

## Claims

1. Method of producing an absorber for absorbing acoustic sound waves comprising a carrier body (1) and spacers (2) as well as a covering unit (11) joined thereto, which covers chamber-like spaces (7) between carrier bodies (1) and spacers (2), wherein said spacers (2) cooperate with said carrier body (1) for forming an integral pre-shaped basic structural unit (10) and said cover unit (11) comprises a covering layer (5) applied on said basic structural unit (5), which is substantially rigidly joined to spacers (2),
**characterised in**
**that** said basic structural unit (10) is initially pre-shaped from said carrier body (1) and spacers projecting therefrom and that then said covering unit (11) is shaped by means of a die (8) corresponding to the contours of the finished covering unit and configured on its face (9), directly on free face ends (3) of spacers (2) and on the edge (4) of said pre-shaped basic structural unit (10), with application of pressure and heat, and is joined there with said basic structural unit.

2. Method according to Claim 1,
**characterised in**
**that** said covering unit (11) is shaped by said die (8) and also heated at least up to the softening point of the synthetic material at joints with said basic structural unit (10).

3. Method according to Claim 1 or 2,
**characterised in**
**that** free face ends (3) of spacers (2) and the edge (4) of said pre-shaped basic structural unit (10) are applied by fusing, and that subsequently said covering unit (11) is shaped by means of said configured die (8) onto said plastified face ends (3), is solidified by cooling and is mechanically joined therewith.

4. Method according to any of the Claims 1 to 3,
**characterised in**
**that** the heating of the synthetic material forming the joints is carried out by inductive heating of an aluminium layer appertaining to said covering layer (11).

## Revendications

1. Procédé de fabrication d'un amortisseur à absorber des ondes sonores acoustiques, comprenant un corps porteur (1) et des écarteurs (2) ainsi qu'une unité de couvercle (11) y relié, qui couvre les espaces (7) similaires aux chambres entre des corps porteurs (1) et des écarteurs (2), dans lequel lesdits écarteurs (2) coopèrent avec ledit corps porteur (1) pour former une unité de construction fondamentale (10) intégrale préformée, et en ce que ladite unité de couvercle (11) comprend une couche de recouvrement (5) appliquée sur ladite unité de construction fondamentale (5), qui est reliée aux écarteurs (2) de façon essentiellement rigide,
**caractérisé en ce**
**que** ladite unité de construction fondamentale (10) est d'abord préformée à partir dudit corps porteur (1) et des écarteurs en saillie du dernier, et en ce qu'ensuite ladite unité de couvercle (11) est formée moyennant une estampe (8) qui corresponde aux contours de l'unité de couvercle fini et est configuré sur sa face (9), directement sur des extrémités de face libres (3) des écarteurs (2) et sur l'arête (4) de ladite unité de construction fondamentale préformée (10), en appliquant de la pression et de la chaleur, et est reliée là à ladite unité de construction fondamentale.

2. Procédé selon la revendication 1,
**caractérisé en ce**
**que** ladite unité de couvercle est formée par ladite estampe (8) et aussi chauffée au moins au point de ramollissement du matériau synthétique aux joints à ladite unité de construction fondamentale (10).

3. Procédé selon la revendication 1 ou 2,
**caractérisé en ce**
**que** des extrémités de face libres (3) des écarteurs (2) et ladite arête (4) de ladite unité de construction fondamentale préformée (10) sont appliquées par fusion, et en ce qu'ensuite ladite unité de couvercle (11) est formée moyennant ladite estampe configurée (8) sur lesdites extrémités de face plastifiées (3), est solidifiée en la refroidissant, et est reliée aux extrémités de façon mécanique.

4. Procédé selon une quelconque des revendications 1 à 3,
**caractérisé en ce**
**que** le chauffage du matériau synthétique, qui constitue les joints, se fait par chauffage inductif d'une couche en aluminium, qui fait partie de ladite couche de recouvrement (11).
